# EUROPEAN PATENT SPECIFICATION

(11) **EP 1 796 893 B1**
(45) Date of publication and mention of the grant of the patent: **11.06.2008**
(21) Application number: 04769531.7
(22) Date of filing: 30.09.2004
(51) Int. Cl.: B29C 47/12, B29D 30/60, B29D 30/16, B29D 30/30

(54) **METHOD AND APPARATUS FOR MANUFACTURING PNEUMATIC TYRES**
VERFAHREN UND VORRICHTUNG ZUR HERSTELLUNG VON LUFTREIFEN.
PROCEDE ET APPAREIL DE FABRICATION DE PNEUS

(43) Date of publication of application: 20.06.2007
(73) Proprietor: PIRELLI TYRE S.p.A., 20126 Milano (IT)
(72) Inventor: POZZATI, Giovanni, c/o PRYSMIAN CABLES & SYSTEMS S.p.A., I-20126 Milano (IT); DE GESE, Ignazio, c/o Pirelli Pneumatici S.p.A., I-20126 Milano (IT); LO PRESTI, Gaetano, c/o Pirelli Pneumatici S.p.A., I-20126 Milano (IT); NOTO, Rodolfo, c/o Pirelli Pneumatici S.p.A., I-20126 Milano (IT); LACAGNINA, Claudio, c/o Pirelli Pneumatici S.p.A., I-20126 Milano (IT)
(74) Representative: Tansini, Elio Fabrizio
(86) International application number: PCT/IB2004/003199
(87) International publication number: WO 2006/035263

(56) References cited:
- EP-A- 0 528 683
- EP-A- 1 418 043
- WO-A-03/101713
- FR-A- 1 426 617
- US-A- 5 129 356
- US-A- 5 171 394

## Description

The present invention relates to a method of manufacturing pneumatic tyres and to a tyre-manufacturing apparatus operating in accordance with said method.

A tyre generally comprises a carcass structure including at least one carcass ply having end flaps in engagement with respective annular anchoring structures, each usually formed of a substantially circumferential annular insert to which at least one filling insert is applied, at a radially external position.

Associated with the carcass structure is a belt structure comprising one or more belt layers, disposed in radial superposed relationship with respect to each other and to the carcass ply and having textile or metallic reinforcing cords with a crossed orientation and/or substantially parallel to the circumferential extension direction of the tyre. Before or after assembling of the belt structure to the carcass structure, a tread band of elastomer material is applied to the belt structure itself at a radially external position.

In addition, respective sidewalls of elastomer material are applied to the side surfaces of the carcass structure, each extending from one of the side edges of the tread band until close to the respective annular anchoring structure to the beads.

It is to be pointed out, to the aims of the present description that by the term "elastomer material" it is intended a composition comprising at least one elastomeric polymer and at least one reinforcing filler. Preferably this composition further comprises additives such as a cross-linking agent and/or a plasticizer. Due to the presence of the cross-linking agent, this material can be cross-linked through heating, so as to form the final article of manufacture.

According to conventional manufacturing methods, the tread band and sidewalls, as well as other structural components of the tyre, are each made from a continuously extruded section member that, after cooling for stabilising its geometrical conformation, is stored on suitable tables or reels. The semifinished product in the form of sections or of a continuous strip is then sent to a feeding unit the task of which is to pick up the sections or cut the continuous strip into sections of predetermined length, each of them constituting the tread band or one of the sidewalls to be circumferentially applied to the tyre under working.

In Patent US 5,171,394, structural components of a tyre are laid on a rigid drum by means of a positive-displacement extruder having an outlet port of small sizes located in the vicinity of the surface onto which the elastomer is to be applied. The components of elastomer material are formed through movement of the extruder relative to the surface of the toroidal support driven in rotation, concurrently with supply of the elastomer material in the form of a continuous elongated element.

According to documents WO 00/35666 and WO 01/36185 in the name of the same Applicant, some components of the tyre, among which the tread band and sidewalls for example, are obtained through dispensing of an elongated element from an extruder, to suitably distribute it on the drum carrying the tyre under working, while said tyre is rotated around its axis. Simultaneously, the support drum, hanging from a robotized arm, is moved in front of the extruder to cause transverse distribution of the elongated element and thus form a plurality of circumferential coils therewith, said coils being disposed close to each other and/or radially superposed to define the structural component of the tyre.

In document WO 04/041522 in the name of the same Applicant as well, the carcass structure is provided to be formed through assembling of semifinished products on a support drum, to be subsequently coupled with the belt structure made on an auxiliary drum. The drum used in the step of coupling the carcass structure with the belt structure is in engagement with an actuating device comprising a movable carriage or a robotized arm designed to sequentially transfer said drum and conveniently move it in front of a series of extruders each set to lay a respective continuous elongated element of elastomer material on the carcass structure and/or belt structure, the physico-chemical features of said elongated element being specifically selected based on the type of component to be manufactured by the individual extruder, so as to form the tread band and sidewalls of the tyre. In an alternative embodiment, the support drum is borne by a carriage and the extruder or extruders are radially and/or transversely movable relative to the geometric axis of the drum to cause distribution of the respective elongated elements formed into coils disposed radially close to each other against the opposite sides of the tyre under working.

A similar method of manufacturing pneumatic tyres and a corresponding apparatus for carrying out the method are disclosed in document EP 1 418 043-A.

The Applicant has perceived that when an elongated element having a basically flattened section is used, laying of said element in a desired positioning on the laying surface can be hardly controlled in a sufficiently precise manner, above all when said surface has a curvilinear profile. In particular this situation can be found at the transition regions between the tread band and sidewalls.

In addition, arrangement of the elongated element usually takes place in a plane parallel to the laying surface, i.e. with the major axis of the cross-section profile parallel to the laying surface, and this gives rise to inaccuracies in laying and distortions in the geometrical structure of the elongated element itself, in the stretch between the exit point from the extruder die and the application point.

The Applicant has also verified the possibility of making the elongated element take an incident orientation relative to the laying surface by laying the coils with an axial spiralling pitch smaller than the maximum width of the elongated element. By doing so, in fact, each coil would be laid in an axially offset relationship with the previously formed coil and radially overlapping part of the width thereof, so as to take an inclined orientation astride the side edge of said previously formed coil. By forming several coils in succession in the above described manner, the elongated element can be gradually led to take an orientation close to the perpendicular relative to the laying surface, i.e. with the major axis of the cross-section profile substantially perpendicular to the laying surface.

However it was ascertained that this would force the elongated element to suffer further geometrical distortions.

In order to reduce the above described geometrical distortions to acceptable limits, it may in addition be necessary that the exit die of the extruder be maintained spaced some distance from the laying surface, which will further penalise a precise control on laying.

Therefore, in accordance with the present invention the Applicant realised the possibility of obtaining a better control on the geometry of the article of manufacture by a convenient management of the orientation of the elongated element around the longitudinal extension thereof during dispensing, so as to efficiently counteract the natural tendency of the elongated element to arrange itself in a given orientation relative to the laying surface. However carrying out this type of control with the aid of the methods and apparatus of the known art is rather complicated since use of robots or handling devices of complex structure and difficult control in operation would be required, in particular when very heavy and bulky drums are utilised as it happens in manufacturing tyres for trucks and the like, for example.

Therefore the Applicant has found that if a nozzle suitable to be oriented around its longitudinal axis representing the exit direction of the material is arranged on the extruder, it is possible to follow the profile of the laying surface even by merely moving the drum and/or the extruder on one or two Cartesian axes, without necessarily requiring the aid of a robot.

In a first aspect, the invention relates to a method of manufacturing pneumatic tyres, comprising the steps of: assembling components of a tyre under working on a laying surface of a support element, wherein at least one of said components is formed through the steps of: positioning the support element in front of a nozzle of a dispensing device; dispensing an elastomer material through the nozzle, to form a continuous elongated element; carrying out a relative movement between the support element and the nozzle to wind up and distribute the continuous elongated element along a preestablished path on the laying surface of the support element itself, in order to form the tyre component; controlling, during formation of the tyre component., the orientation of the nozzle around the exit direction of the elongated element from the nozzle, so as to follow said laying surface.

As a matter of fact, the Applicant realised that greater accuracy in positioning the elongated element laid on the article of manufacture could be achieved if the nozzle of the elongated element was suitably oriented. In fact, it is advantageously possible to extrude the elongated element according to an orientation corresponding to the required one in the laying point. Thus the nozzle can be positioned in close proximity to the application point of the elongated element, so that distortions in the structure of said element are avoided in the stretch between the exit from the nozzle and the application point.

In a further aspect the invention relates to an apparatus for manufacturing tyres comprising: at least one support element, devices for assembling components of a tyre under working on a laying surface carried by the support element; wherein said assembling devices comprise: at least one dispensing device set to dispense a continuous elongated element of elastomer material through a nozzle; actuating devices to cause a relative movement between said support element and said nozzle, so as to form the tyre component on said laying surface; devices for control of the orientation of the nozzle around the exit direction of the elongated element from the nozzle.

Further features and advantages will become more apparent from the detailed description of a preferred but not exclusive embodiment of a method and an apparatus for manufacturing tyres in accordance with the present invention.

This description will be set out hereinafter with reference to the accompanying drawings, given by way of non-limiting example, in which:
- Fig. 1 diagrammatically shows a work station incorporating apparatuses in accordance with .the present invention;
- Fig. 2 is a diagrammatic top view of a further application example of the apparatus in reference;
- Fig. 3 shows a construction detail of the apparatus in question, sectioned along a plane diametrical to a nozzle of a dispensing device;
- Fig. 3a shows a detail seen in Fig. 3 to an enlarged scale;

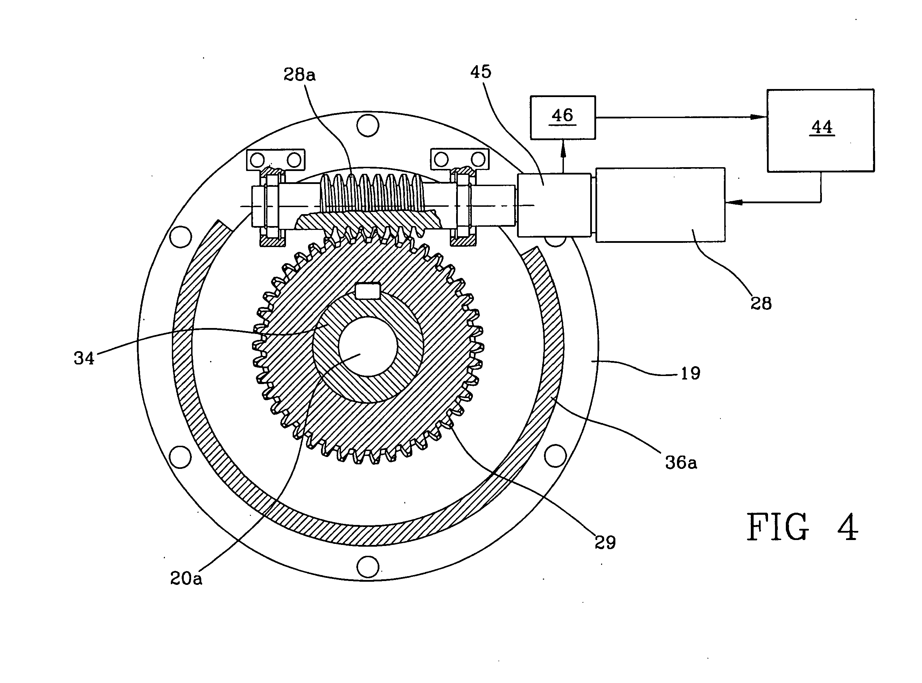

- Fig. 4 is a section taken along line IV-IV in Fig. 3;
- Figs. 5 and 6 show the apparatus of the invention in two different operating conditions;
- Figs. 7a and 7b show two different laying schemes respectively, of a continuous elongated element, to be carried out by the apparatus in reference;
- Fig. 8 shows, by way of example, a tyre obtainable in accordance with the present invention, in a fragmentary sectional view.

Referring particularly to the drawings, an apparatus for manufacturing tyres, set to put into practice a method in accordance with the present invention, has been generally identified with reference numeral 1.

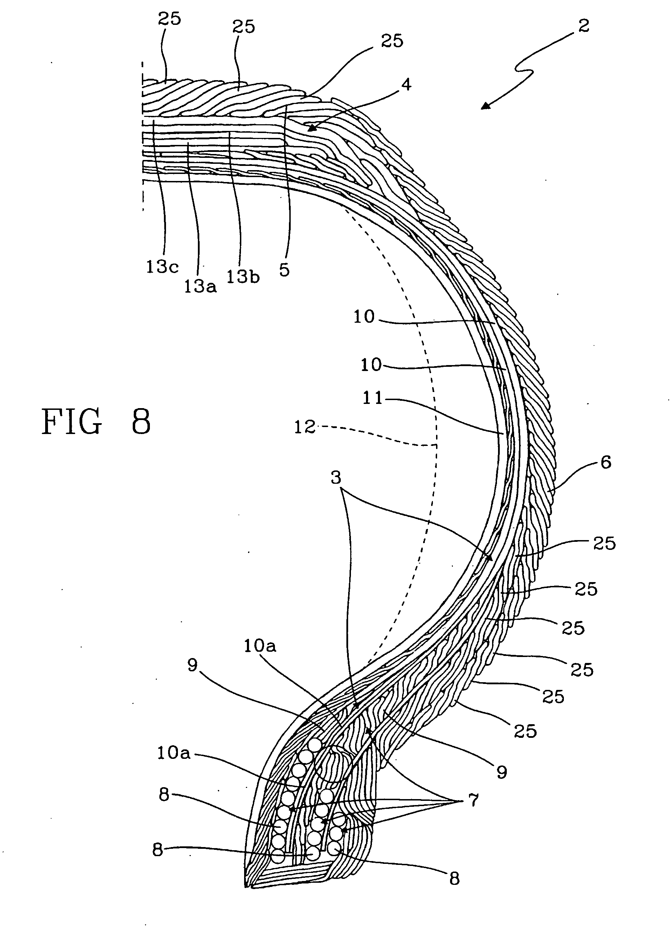

The invention aims at manufacturing tyres of the type generally denoted at 2 in Fig. 8, essentially comprising a carcass structure 3 of a substantially toroidal conformation, a belt structure 4 of a substantially cylindrical conformation and radially extending around the carcass structure 3, a tread band 5 applied to the belt structure 4 at a circumferentially external position, and a pair of sidewalls 6 laterally applied to the, carcass structure 3, on opposite sides.

Each of the sidewalls 6 and the tread band 5 essentially comprise at least one layer of elastomer material of suitable thickness. Also associated with the tread band 5 can be a so-called underlayer 5a of elastomer material of suitable composition and physico-chemical characteristics, which acts as an interface between the tread band and the underlying belt structure 4.

The carcass structure 3 comprises a pair of annular anchoring structures 7, integrated into regions usually identified as "beads", each consisting for example of a substantially circumferential annular insert 8, usually called "bead core", carrying an elastomeric filler 9 at a radially external position. In engagement with each of the annular anchoring structures are the end flaps 10a of at least one carcass ply 10 comprising textile or metallic cords extending transversely of the circumferential extension of tyre 2, possibly following a predetermined inclination, from one of the annular anchoring structures 7. to the other. Finally, in tyres of the tubeless type, i.e. without an air tube, the carcass structure has a substantially airtight layer of elastomer material, generally identified as the "liner", at a radially internal position.

In run flat tyres or tyres for particular uses, auxiliary reinforcing inserts 12 may be also provided, of the type usually referred to as "sidewall inserts" for example, applied close to the sidewalls 6 internally of the carcass ply 10 as shown in chain line, or between two paired carcass plies.

The belt structure 4 can in turn comprise one or more belt layers 13a, 13b including metallic or textile cords suitably inclined to the circumferential extension of tyre 2, in respectively crossed orientations between a belt layer and the other, as well as a possible outer belting layer comprising one or more cords circumferentially wound up into coils disposed axially in side by side relationship around the belt layers 13a, 13b.

Apparatus 1, possibly integrated into a plant (not shown as a whole) dedicated to production of tyres or execution of part of the working operations provided in the tyre production cycle, comprises devices 14 for assembling at least part of the construction components of tyre 1 on at least one support element 15.

In the examples shown just as an indication, part of the construction components of tyre 2 such as the carcass plies 10, annular anchoring structures 7 and/or belt structure 4, are provided to be made in the form of semifinished products and subsequently assembled on the support element 15.

Depending on uses and the involved process steps, this support element 15 can be therefore represented either by a conventional building drum of cylindrical conformation, of the type currently used for assembling the components co-operating in forming the carcass structure, or by the tyre 2 itself that is about to be formed on the building drum or a shaping drum used to obtain assembling of the belt structure 4 on the carcass structure 3.

Alternatively, should each construction component of tyre 2 be made through sequential application of elementary semifinished products onto the support element 15 or the tyre 2 under working, which semifinished products consist of continuous elongated elements of elastomer material and/or one or more textile or metallic cords incorporated into a layer of elastomer material, the support element may comprise a rigid toroidal support conforming in shape to the inner surfaces of the tyre itself, as described in documents WO-00/35666 and WO-01/36185 in the name of the same Applicant, for example.

For the purpose of manufacturing components of elastomer material, such as the tread band 5, sidewalls 6, possible underlayer 5a, fillers 9, liner 11, and/or possible sidewall inserts 12, said assembling devices 14 preferably comprise at least one extruder 16 or other suitable dispensing device, set to dispense at least one continuous elongated element 17 directly against the laying surface of the support element 15, or against the tyre component previously formed or being formed on the support element itself.

Extruder 16 has an extrusion head 18 carrying a fixed front wall 19, from which a nozzle 20 projects, said nozzle being longitudinally passed through by a connecting duct 20a extending in the extension of a dispensing opening 19a formed across the front wall 19 and terminating at an exit die 21 from which the continuous elongated element 17 comes out. Thermoregulating devices 20b can be associated with the nozzle to control the temperature of the elastomer material flowing along the connecting duct 20a.

The die 21 preferably has a cross-section profile which is substantially elongated along its main extension axis N-N perpendicular to the exit direction Z-Z of the elastomer material parallel to the longitudinal extension of nozzle 20, so as to give the continuous elongated element 17 a cross-section profile which is substantially flattened, a rectangular, trapezoidal, elliptic or lenticular _profile for example, the cross-section sizes of which are greatly reduced relative to the cross-section sizes of the component 5, 5a, 6, 9, 11, 12 that is wished to be made. By way of example, the continuous elongated element 17 can have a width included, just as an indication, between 3 millimetres and 15 millimetres, and a thickness in the range of 0.5 millimetres and 1.2 millimetres.

Component 5, 5a, 6, 9, 11, 12 in its final configuration is obtained by dispensing the elongated element 17 on the support element 15, previously positioned in front of nozzle 20, while the actuating devices 22 carry out a relative movement between the support element and the nozzle, to wind and distribute the continuous elongated element 17 in a predetermined path on the laying surface 15a of the support element itself. For the purpose, the actuating devices 22 comprise at least one motor 23 or equivalent rotatory members set to drive the support element 15 in rotation to give the laying surface 15a a rotatory motion for circumferential winding of the elongated element 17 around a geometrical axis of the support element itself.

Concurrently with the rotation imposed to the support element 15, members 24 intended for translational-driving movements carry out transverse movements between the nozzle 20 and the support element itself, to distribute the continuous elongated element 17 into coils 25 disposed close to each other in an axial direction and/or superposed on each other in a radial direction, so as to follow the laying surface 15a along a predetermined laying path based on a desired cross-section profile to be given to the component 5, 5a, 6, 9, 11, 12 being manufactured.

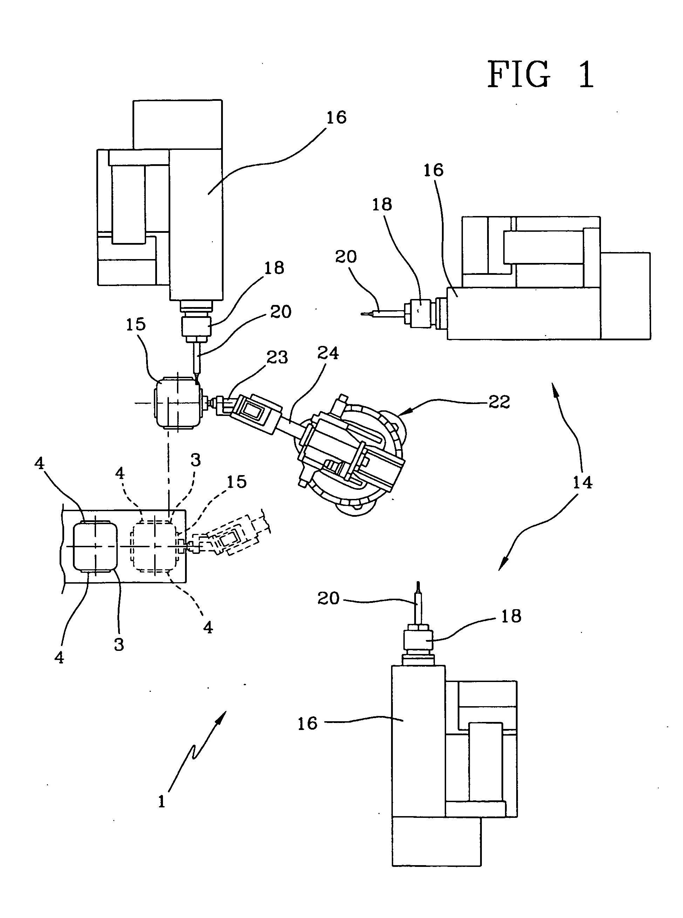

In accordance with the embodiment in Fig. 1, the actuating devices 22 essentially comprise a robotized arm set to removably engage the support element 15, and integrating both the rotatory driving members 23 designed to carry out rotation of the support element itself around the geometrical axis thereof, and the translational driving members 24 carrying out the transverse-distribution movements. By way of example, a seven-axis anthropomorphous robotized arm can be used as described in documents WO-00/35666 and WO-01/36185 in the name of the same Applicant.

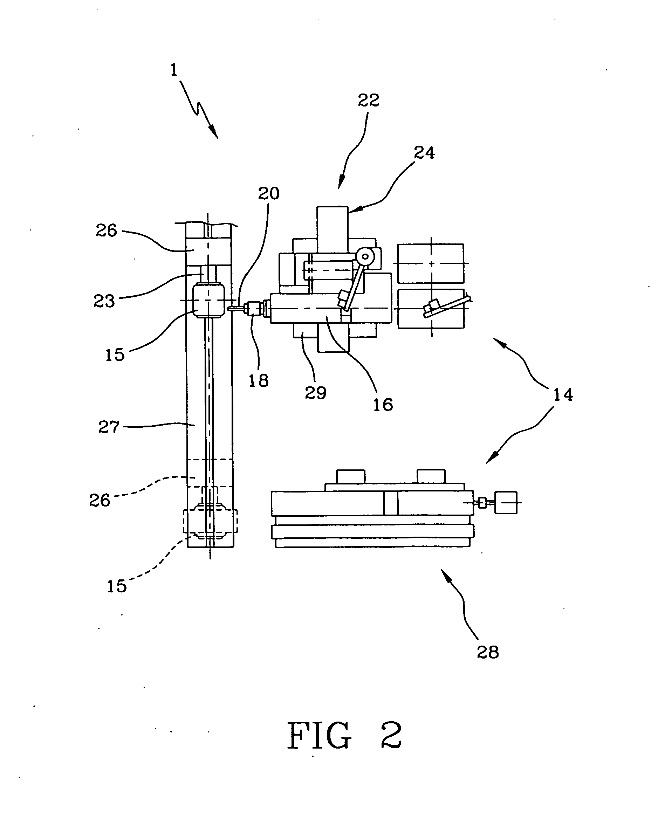

In the embodiment in Fig. 2, the actuating devices 22 comprise a carriage 26 carrying the rotatory driving members 23 set to engage the support element 15.

Carriage 26 is preferably movable along a guide structure 27 between a first position and a second position, identified with a chain line and a solid line respectively in Fig. 2. In the first position, carriage 26 carries the support element 15 in front of a work station 28 dedicated to formation of the carcass structure 3 and/or the belt structure 4, through application of the carcass plies 10, annular anchoring structures 7, belt layers 13a, 13b and/or other construction components made in the form of a semifinished product as described in document WO 04/041522, for example.

In the second position, carriage 26 carries the support element 15 in front of said at least one extruder 16 or other dispensing member for manufacturing other structural components 5, 5a, 6, 9, 11, 12 of elastomer material, through spiralling of the continuous elongated element 17.

In this embodiment, the translational-driving members 24 can for example comprise the same guide structure 27 associated with carriage 26, and/or further slide guides 29 associated with the extruder 16 to cause a relative movement between the support element 15 and the extruder itself in respectively orthogonal first and/or second directions X, Y.

Apparatus 1 further comprises control devices generally denoted at 30 that, during laying of the elongated element 17 to form the component 5, 5a, 6, 9, 11, 12 of tyre 2, control orientation of nozzle 20 around the exit direction Z-Z of the elongated element itself, to conveniently modulate orientation of same relative to the laying surface 15a, as better clarified in the following.

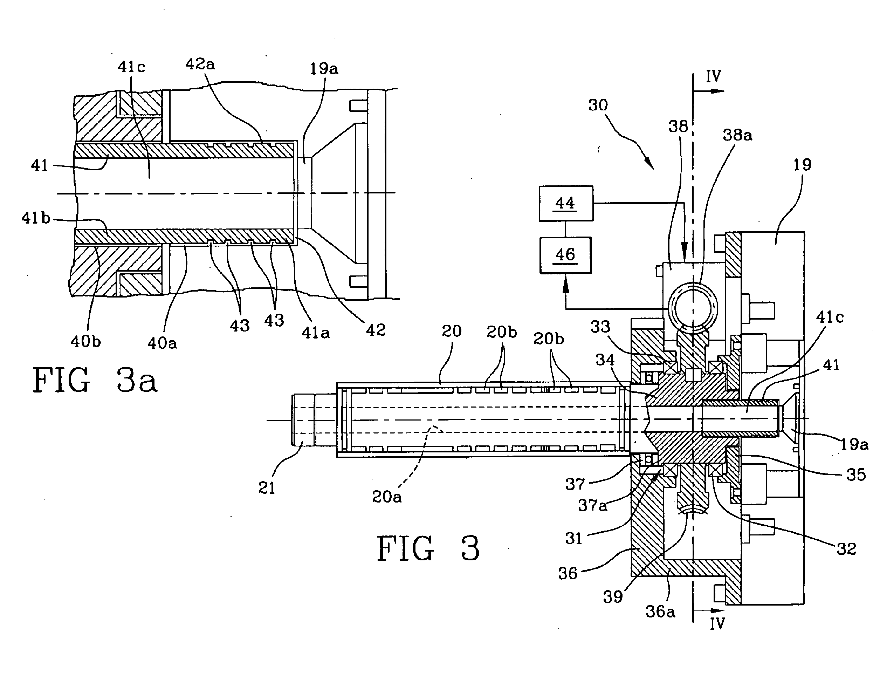

In more detail, as better shown in Fig. 3, nozzle 20 is rotatably supported relative to the front wall 19 of the extrusion head 18 by means of connecting devices 31 that, in the example shown, comprise a first and a second radial bearings 32, 33 fitted on an end connector 34 provided on nozzle 20 on the opposite side from die 21.

The first radial bearing 32 is in engagement with a first flange 35 fastened to the front wall 19 of the extrusion head 18, whereas the second radial bearing 33 is in engagement, at an axially spaced apart position from the first bearing 32, with a second flange 36 fastened to the front wall 19 by means of a spacer 36a. A thrust bearing 37 is further operatively interposed between a radial shoulder 37a formed on the end connector 34 of nozzle 20 and the second flange 36 rigidly connected to the front wall 19.

An actuator 38 allows nozzle 20 to be driven in rotation around the direction Z-Z. Actuator 38 can comprise a motor for example, that is fastened to the front wall 19 and carries a worm screw 38a operatively meshing with a cog wheel 39 coaxially carried by the end connector 34, between the first and second radial bearings 32, 33.

Preferably, the connecting devices 31 further comprise an engagement seat 40a, 40b formed in the end connector 34 of nozzle 20 and/or in the dispensing opening 19a of the front wall 19, to rotatably engage a union bushing 41 longitudinally passed through by a union duct 41c extending between the dispensing opening and the connecting duct 20a passing along nozzle 2'0.

In a preferential solution, two engagement seats denoted at 40a and 40b are provided; they are formed in the front wall 19 and in nozzle 20 respectively, in an axial alignment relationship, and they respectively engage a first portion 41a of the union bushing 41 projecting with respect to nozzle 20, and a second portion 41b of the union bushing itself, projecting with respect to the front wall 19.

Defined between the union bushing 41 and the engagement seat 40a, 40b is at least one gap 42 communicating with the connecting duct 20a and set to receive a small portion of the elastomer material conveyed towards the die 21, during operation of extruder 16.

Formed along the gap 42 is at least one gauged narrow passage 42a for stagnation and cross-linking of the elastomer material, such sized as to slow downflowing of the material itself to such an extent that said material is submitted to cross-linking, also by effect of the heat stored up by the material during the plasticizing step carried out in the extruder, and/or transmitted through the walls of the extrusion head 18 and/or of nozzle 20.

In the embodiment shown, the gauged narrow passage 42a substantially extends along the whole axial extension of the first portion 41a of the union bushing 41, and is defined by a slight mechanical slack, just as an indication included between about 0.05 mm and about 0.5 mm, created between the outer diameter of the bushing itself and the diameter of the corresponding engagement seat 40a.

The size of the gauged narrow passage is adapted to cause cross-linking of the elastomer material and therefore stopping of the material flow along the gap itself, before said material reaches the mutually facing surfaces of the front wall 19 and the end connector 34 of nozzle 20. One or more circumferential grooves 43 arranged in the first portion 41a of the union bushing 41 and/or the corresponding portion 40a of the engagement seat substantially form a labyrinth path aiming at promoting stagnation of the elastomer material so as to form, following cross-linking of the latter, a sort of sealing ring in each of the grooves themselves.

Due to stagnation and cross-linking of the elastomer material in the gauged narrow passage 42a, transmission of too strong axial-thrust forces to nozzle 20 does not occur, even in the presence of high feeding pressures of about 1000 bars of the elastomer material. In fact, it is to be pointed out in this connection that the thrust action exerted by the elastomer material under pressure only concerns the radial extension of the ends of the union bushing 41, and/or the corresponding engagement seats 40a, 40b. This axial thrust can be easily counteracted by the thrust bearing 37.

It can be seen that in the preferred embodiment herein illustrated, bushing 41 acts like a piston pushed by the pressure of the elastomer material and it transfers its sealing surface from the radial one (that would require a high axial load and therefore would generate an important friction torque) to the axial cylindrical one on which also said labyrinth path is disposed.

The axial tolerances arranged between the union bushing 41 and the engagement seats 40a, 40b in fact can be advantageously set in such a manner as to enable the elastomer material to radially penetrate into the gap 42 in the region close to the dispensing opening 19a, to make the union bushing 41 abut against the end connector 34 and thus utilise the pressure of the elastomer material to constantly push the union bushing against nozzle 20.

In this way, the sliding friction on the contact surface between the union bushing 41 and nozzle 20 can be completely eliminated, said friction constituting the greatest part of the rotation-resisting torque of the nozzle itself. In order to facilitate rotation of nozzle 20, the union bushing 41 can be advantageously made of a bronze alloy or other suitable sintered materials so as to offer a low friction coefficient with respect to the material (generally steel) of the other contiguous components.

Management of actuator 38 is carried out by a control unit 44, preferably represented by an electronic programmable processing unit also overseeing operation of extruder 16 and the actuating devices 22. The control unit 44 carries out a control on laying of coils 25 driving nozzle 20 in rotation in accordance with a preset program, so as to control orientation of said nozzle 20 around the exit direction Z-Z of the continuous elongated element 17 from die 21, in such a manner as to enable the nozzle to suitably follow the laying surface 15a of the support element 15, during formation of component 5, 5a, 6, 9, 11, 12 of tyre 2.

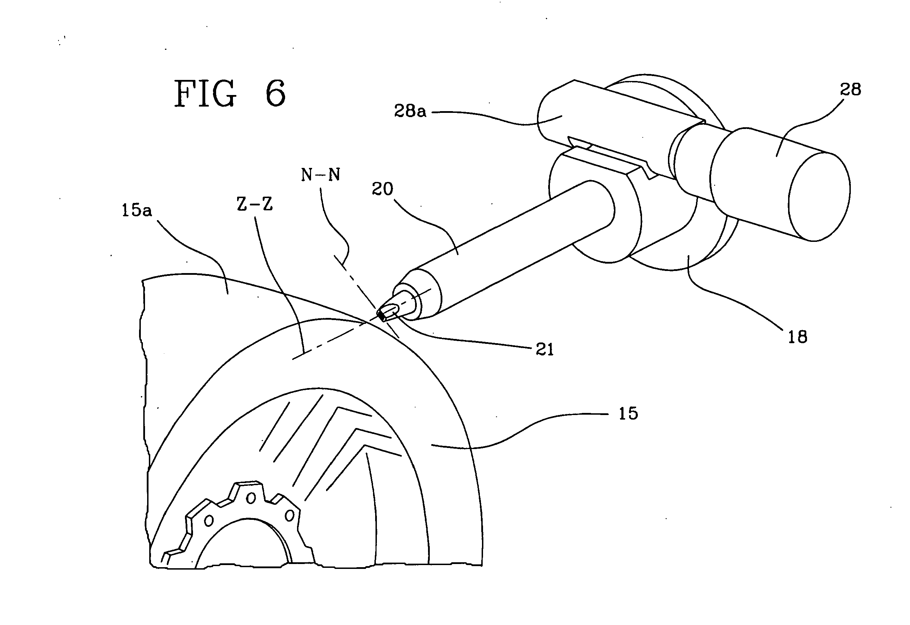

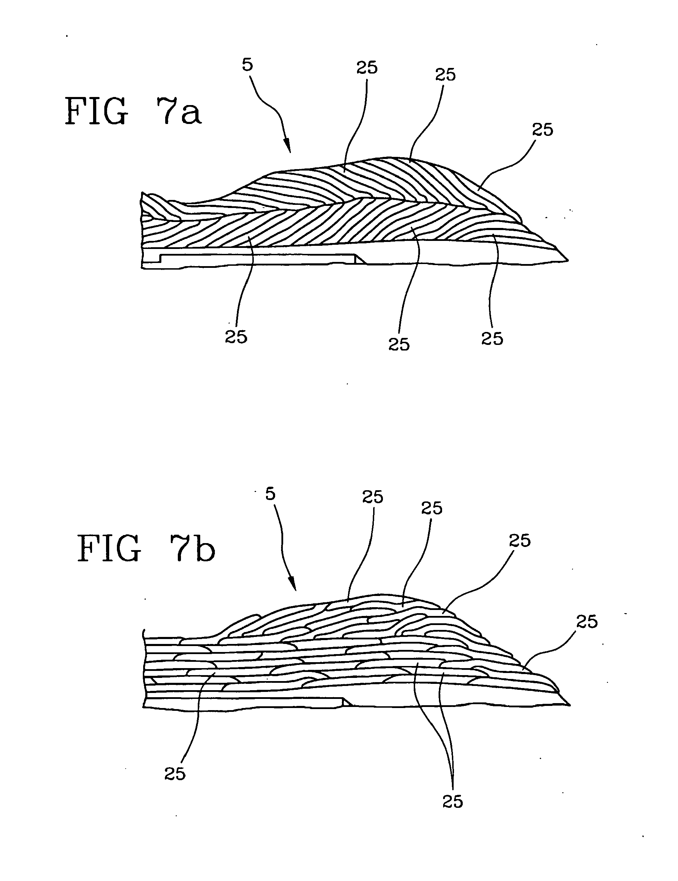

In more detail, control of the rotation of nozzle 20 can be carried out by modulating the orientation of the nozzle itself so as to constantly keep the main extension axis N-N of said die 21 substantially perpendicular to, or in any case disposed with a marked incidence, as shown in Fig. 6, relative to the laying surface 15a in the application point of the elongated element 17, to form the coils 25 following an "edge-wise" laying, as shown in Fig. 7a.

In this manner it is possible to form a great thickness of elastomer material on the laying surface 15a, through laying of a single layer of coils 25, which advantageously reduces the working time as compared with laying of many layers of superposed coils, as required for obtaining the same thickness through a "flat" laying modality. In addition, even when laying of two or more layers of coils 25 is required, due to the possibility of forming great thicknesses by a single layer, the amount of air usually entrapped in the elastomer material between adjacent coils close to the opposite side edges of the elongated element 17 is greatly reduced.

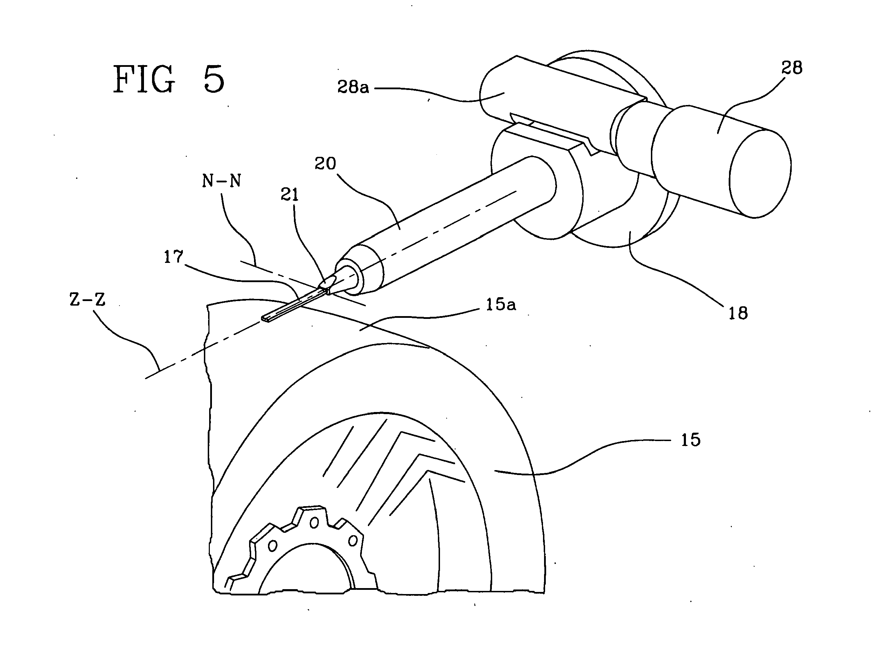

Alternatively, orientation of nozzle 20 can be controlled so as to constantly maintain the main extension axis N-N of die 21 parallel to the laying surface 15a in the application point of the elongated element 17, as shown in Fig. 5, to form coils 25 following a "flat" laying as shown in Fig. 7b. This laying modality enables components of reduced thickness such as the liner 11 or underlayer 5a of the tread band 5 to be formed quickly.

If required, orientation of nozzle 20 can also be advantageously modulated during formation of component 5, 5a, 6, 9, 11, 12, at any intermediate position between the "flat" laying condition and the "edge-wise" laying condition. The possibility of orienting the elongated element 17 relative to the laying surface 15a enables more flexibility and accuracy in controlling thickness of the layer made up of the coils 25 disposed side by side, and makes it possible to also obtain components having a complicated profile.

To enable the control unit 44 to carry out an efficient management of the orientation of nozzle 20, it is provided that during laying of the elongated element 17 at least one parameter relating to orientation of nozzle 20 be cyclically detected, by an encoder 45 associated with actuator 38 for example, or any other suitable device. A comparator 46, possibly integrated into the control unit 44 cyclically receives a signal representative of the orientation of nozzle 20 from the encoder 45, and compares it with at least one predetermined reference parameter, stored in the control unit itself, for example. When the parameter detected by encoder 45 differs from the stored reference parameter, the control unit 44 acts on actuator 38 to modify the orientation of nozzle 20, so as to conform it to the reference parameter.

Therefore the invention enables an excellent geometrical control of components 5, 5a, 6, 9, 11, 12, made on the support element 15 to be obtained, through a suitable control of the orientation of the elongated element 17 around the longitudinal extension thereof during dispensing, in spite of the natural tendency of the elongated element itself to take an orientation parallel to the laying surface.

In addition, the invention enables the profile of the laying surface 15a to be followed also by a simple movement of the support element 15 and/or the extruder 16 on one or two Cartesian axes, without necessarily requiring the aid of complicated actuating devices, in particular when very heavy and bulky drums are used, as it happens in manufacturing tyres for trucks and the like, for example.

It is also to be pointed out that control of the orientation of the elongated element 17 carried out through rotation of nozzle 20 enables the die 21 to be maintained in close proximity to the laying surface, thereby avoiding stresses and distortions being imposed on the elongated element itself.

The expedients adopted in making the control devices 30 in addition give rise to a rotating sealing system capable of resisting pressures as high as 1000 bars and temperatures in the order of 150°C, while maintaining a low rotation-resisting torque of nozzle 20, so that the rotation time is not increased which will cause a reduction in the rotation accuracy, without application of reduction motors of great power and consequently without requiring a bulkiness that cannot be proposed for practical use.

It will be finally appreciated that the method and apparatus in accordance with the invention can be applied to and respectively integrated into traditional manufacturing apparatus, in which the advantages of a spiral-like laying of at least one continuous element of elastomer material is obtained without being obliged to use robotized arms as previously illustrated, not only when said arms are very bulky as in the manufacture of tyres for trucks or the like, as already mentioned, but also when said laying operation is to be carried out with particular orientations due to the particular curvature of the tread band for example, as in the case of tyres for two-wheeled vehicles.

## Claims

1. A method of manufacturing pneumatic tyres, comprising the steps of:
- assembling components (5, 5a, 6, 9, 11, 12) of a tyre under working (2) on a laying surface (15a) of a support element (15),
wherein at least one of said components (5, 5a, 6, 9, 11, 12) is formed through the steps of:
- positioning the support element (15) in front of a nozzle (20) of a dispensing device (16);
- dispensing an elastomer material through the nozzle (20), to form a continuous elongated element (17);
- carrying out a relative movement between the support element (15) and the nozzle (20) to wind up and distribute the continuous elongated element (17) along a preestablished path on the laying surface (15a) of the support element itself, in order to form the tyre component (5, 5a, 6, 9, 11, 12);
- controlling, during formation of the tyre component (5, 5a, 6, 9, 11, 12), the orientation of the nozzle (20) around the exit direction (Z-Z) of the elongated element (17) from the nozzle (20), so as to follow said laying surface (15a).

2. A method as claimed in claim 1, wherein control of the orientation of the nozzle (20) comprises the step of modifying the orientation of said nozzle (20) in accordance with a predetermined program during formation of the component (5, 5a, 6, 9, 11, 12) of the tyre (2).

3. A method as claimed in claim 1, wherein during control of the orientation of the nozzle (20) the following step sequence is cyclically repeated:
- detecting at least one parameter relating to orientation of the nozzle (20);
- comparing the detected parameter with at least one predetermined reference parameter; and
- modifying the orientation of the nozzle (20) to conform it to the reference parameter, when the detected parameter differs from the reference parameter.

4. A method as claimed in claim 1, wherein the nozzle (20) is provided with a die (21) having a substantially elongated profile along a main extension axis thereof (N-N), said profile lying in a plane substantially perpendicular to the exit direction (Z-Z) of the elastomer material.

5. A method as claimed in claim 4, wherein said control step consists in modulating the orientation of the nozzle (20) between a flat-laying condition in which said main extension axis (N-N) of the die (21) is substantially parallel to the laying surface (15a) in an application point of the elongated element (17), and an edge-wise-laying condition in which said main extension axis (N-N) of the die (21) is substantially perpendicular to the laying surface (15a) in an application point of the elongated element (17).

6. A method as claimed in claim 4, wherein said control step consists in modulating the orientation of the nozzle (20) so as to maintain said main extension axis (N-N) of the die (21) substantially parallel to the laying surface (15a) in an application point of the elongated element (17).

7. A method as claimed in claim 4, wherein said control step consists in modulating the orientation of the nozzle (20) so as to maintain said main extension axis (N-N) of the die (21) substantially perpendicular to the laying surface (15a) in an application point of the elongated element (17).

8. A method as claimed in claim 1, wherein the relative movement between the support element (15) and the nozzle (20) comprises the steps of:
- driving the support element (15) in rotation to give the laying surface (15a) a movement for circumferential winding of the elongated element (17);
- carrying out relative transverse-distribution displacements between the nozzle (20) and the support element (15) to distribute the continuous elongated element (17) into coils disposed close to each other on the laying surface (15a), so as to form the component (5, 5a, 6, 9, 11, 12) of the tyre (2).

9. An apparatus for manufacturing tyres comprising:
- at least one support element (15);
- devices (14) for assembling components (5, 5a, 6, 9, 11, 12) of a tyre (2) under working on a laying surface (15a) carried by the support element (15);
wherein said assembling devices (14) comprise:
- at least one dispensing device (16) set to dispense a continuous elongated element (17) of elastomer material through a nozzle (20);
- actuating devices (22) designed to cause a relative movement between said support element (15) and said nozzle (20), so as to form the tyre component (5, 5a, 6, 9, 11, 12) on said laying surface (15a);
- devices (30) for control of the orientation of the nozzle (20) around the exit direction (Z-Z) of the elongated element (17) from the nozzle (20).

10. An apparatus as claimed in claim 9, wherein said control devices (30) comprise:
- connecting devices (31) to rotatably support said nozzle (20) relative to a fixed front wall (19) of the dispensing device (16);
- an actuator (38) to drive the nozzle (20) in rotation;
- a control unit (44) operating on the actuator (28) to drive the nozzle (20) in rotation following a predetermined program.

11. An apparatus as claimed in claim 10, wherein said connecting devices (31) comprise:
- a union bushing (41) projecting from at least one of said nozzle (20) and front wall (19), and longitudinally passed through by a union duct (41c) between a dispensing opening (19a) arranged in said front wall (19) and a connecting duct (20a) passing along the nozzle (20);
- an engagement seat (40a, 40b) formed in at least one of said nozzle (20) and front wall (19) to rotatably engage the union bushing (41).

12. An apparatus as claimed in claim 11, wherein said connecting devices (31) further comprise
- at least one gap (42) formed between the bushing (41) and the engagement seat (40a, 40b) and communicating with the union duct (41c) to receive part of the elastomer material from the dispensing opening (19a);
- at least one gauged narrow passage (42a) for stagnation and cross-linking of the elastomer material, formed in said gap (42).

13. An apparatus as claimed in claim 12, wherein said gap (42) has at least one circumferential groove (43) substantially defining a labyrinth path.

14. An apparatus as claimed in claim 12, wherein said connecting devices (31) further comprise at least one thrust bearing (37) operatively interposed between a radial shoulder (37a) formed on the nozzle (20) and a flange (36) rigidly connected to the front wall (19) of the dispensing device (16), to counteract axial thrusts transmitted by the elastomer material received in said gap (42).

15. An apparatus as claimed in claim 10, wherein said connecting devices (31) further comprise at least one support bearing (32, 33) operatively interposed between the nozzle (20) and a flange (35, 36) rigidly connected to the fixed front wall (19) of the dispensing device (16), to rotatably support the nozzle (20) relative to the dispensing device itself.

16. An apparatus as claimed in claim 10, wherein said actuator (38) comprises:
- a motor fastened to the fixed front wall (19) of the dispensing device (16) to drive a worm screw (38a) in rotation;
- a cog wheel (39) carried by the nozzle (20) in coaxial relationship and operatively in engagement with the worm screw (38a).

17. An apparatus as claimed in claim 9, wherein said nozzle (20) comprises a die (21) having a substantially elongated profile along a main extension axis (N-N) thereof lying in a plane substantially perpendicular to the exit direction (Z-Z) of the elastomer material.

18. An apparatus as claimed in claim 10, wherein said control devices (30) further comprise:
- devices (45) for detecting at least one parameter relating to orientation of the nozzle (20);
- comparator devices (46) for comparing the detected parameter with at least one predetermined reference parameter;
- said detecting devices (45) and comparator devices (46) interacting with the control unit (44) to modify the orientation of the nozzle (20) and conform it to the reference parameter, when the detected parameter differs from the reference parameter.

19. An apparatus as claimed in claim 9, wherein said actuating devices (22) comprise:
- rotatory-driving members operating on the support element (15) to give the laying surface (15a) a motion for circumferential winding of the elongated element (17);
- translational-driving members to carry out transverse movements between the nozzle (20) and the support element (15) so as to distribute the continuous elongated element (17) into coils disposed close to each other on the laying surface (15a).

20. An apparatus as claimed in claim 9, wherein said dispensing device (16) comprises at least one extruder.

## Patentansprüche

1. Verfahren zum Herstellen von Luftreifen, wobei das Verfahren die Schritte aufweist:
- Zusammenfügen von Komponenten (5, 5a, 6, 9, 11, 12) eines in Bearbeitung befindlichen Reifens (2) auf einer Ablegefläche (15a) eines Trägerelements (15),
- wobei wenigstens eine der Komponenten (5, 5a, 6, 9, 11, 12) durch die Schritte gebildet wird:
-- Positionieren des Trägerelements (15) vor einer Düse (20) einer Abgabeeinrichtung (16),
-- Abgeben eines elastomeren Materials durch die Düse (20) zur Bildung eines fortlaufenden langgestreckten Elements (17),
-- Ausführen einer Relativbewegung zwischen dem Trägerelement (15) und der Düse (20) zum Aufwickeln und Verteilen des fortlaufenden langgestreckten Elements (17) längs einer vorgegebenen Bahn auf der Ablegefläche (15a) des Trägerelements, um die Reifenkomponente (5, 5a, 6, 9, 11, 12) zu bilden und
- während der Bildung der Reifenkomponente (5, 5a, 6, 9, 11, 12) Steuern der Ausrichtung der Düse (20), um die Auslassrichtung (Z-Z) des langgestreckten Elements (17) von der Düse (20) aus herum, um der Ablegefläche (15a) zu folgen.

2. Verfahren nach Anspruch 1, bei welchem die Steuerung der Ausrichtung der Düse (20) den Schritt aufweist, die Ausrichtung der Düse (20) entsprechend einem vorgegebenen Programm während der Bildung der Komponente (5, 5a, 6, 9, 11, 12) des Reifens (2) zu modifizieren.

3. Verfahren nach Anspruch 1, bei welchem während der Steuerung der Ausrichtung der Düse (20) die folgende Schrittfolge zyklisch wiederholt wird:
- Erfassen wenigstens eines Parameters bezüglich der Ausrichtung der Düse (20),
- Vergleichen des erfassten Parameters mit wenigstens einem vorgegebenen Bezugsparameter, und
- Modifizieren der Ausrichtung der Düse (20), um eine Übereinstimmung mit dem Bezugsparameter herzustellen, wenn der erfasste Parameter sich von dem Bezugsparameter unterscheidet.

4. Verfahren nach Anspruch 1, bei welchem die Düse (20) mit einem Mundstück (21) versehen ist, das ein im Wesentlichen langgestrecktes Profil auf einer Haupterstreckungsachse (N-N) von ihm hat, wobei das Profil in einer Ebene liegt, die im Wesentlichen senkrecht zur Austrittsrichtung (Z-Z) des elastomeren Materials ist.

5. Verfahren nach Anspruch 4, bei welchem der Steuerschritt darin besteht, die Ausrichtung der Düse (20) zwischen einem eben liegenden Zustand, in welchem die Haupterstreckungsachse (N-N) des Mundstücks (21) im Wesentlichen parallel zur Ablegefläche (15a) in einem Aufbringpunkt des langgestreckten Elements (17) ist, und einem randweisen Ablegezustand zu modulieren, in welchem die Haupterstreckungsachse (N-N) des Mundstücks (21) im Wesentlichen senkrecht zur Ablegefläche (15a) in einem Aufbringpunkt des langgestreckten Elements (17) ist.

6. Verfahren nach Anspruch 4, bei welchem der Steuerschritt darin besteht, die Ausrichtung der Düse (20) so zu modulieren, dass die Haupterstreckungsachse (N-N) des Mundstücks (21) im Wesentlichen parallel zurAblegefläche (15a) in einem Aufbringpunkt des langgestreckten Elements (17) gehalten wird.

7. Verfahren nach Anspruch 4, bei welchem der Steuerschritt darin besteht, die Ausrichtung der Düse (20) so zu modulieren, dass die Haupterstreckungsachse (N-N) des Mundstücks (21) im Wesentlichen senkrecht zur Ablegefläche (15a) in einem Aufbringpunkt des langgestreckten Elements (17) gehalten wird.

8. Verfahren nach Anspruch 1, bei welchem die Relativbewegung zwischen dem Trägerelement (15) und der Düse (20) die Schritte aufweist:
- In-Drehung-Versetzen des Trägerelements (15), um der Ablegefläche (15a) eine Bewegung für ein Wickeln des langgestreckten Elements (17) am Umfang zu geben, und
- Ausführen von relativen Querverteilungs-Verschiebungen zwischen der Düse (20) und dem Trägerelement (15), um das fortlaufende langgestreckte Element (17) in Windungen zu verteilen, die nahe beieinander auf der Ablegefläche (15a) so angeordnet werden, dass die Komponente (5, 5a, 6, 9, 11, 12) des Reifens (2) gebildet wird.

9. Vorrichtung zur Herstellung von Reifen
- mit wenigstens einem Trägerelement (15)
- mit Einrichtungen (14) zum Zusammenfügen von Komponenten (5, 5a, 6, 9, 11, 12) eines in Bearbeitung befindlichen Reifens (2) auf einer Ablegefläche (15a), die von dem Trägerelement (15) getragen wird,
- wobei die Zusammenfügeinrichtungen (14)
-- wenigstens eine Abgabeeinrichtung (16), die so eingestellt ist, dass sie ein fortlaufendes langgestrecktes Element (17) aus elastomerem Material durch eine Düse (20) abgibt,
-- Betätigungseinrichtungen (22), die so ausgelegt sind, dass sie eine Relativbewegung zwischen dem Trägerelement (15) und der Düse (20) herbeiführen, um die Reifenkomponente (5, 5a, 6, 9, 11, 12) auf der Ablegefläche (15a) auszubilden, und
-- Einrichtungen (30) zum Steuern der Ausrichtung der Düse (20), um die Austrittsrichtung (Z-Z) des langgestreckten Elements (17) aus der Düse (20) herum zu steuern.

10. Vorrichtung nach Anspruch 9, bei welcher die Steuereinrichtungen (30)
- Verbindungseinrichtungen (31) für ein drehbares Halten der Düse (20) bezüglich einer feststehenden Stirnwand (19) der Abgabeeinrichtung (16),
- eine Betätigungseinrichtung (38) zum In-Drehung-Versetzen der Düse (20) und
- eine Steuereinheit (44) aufweisen, die an der Betätigungseinrichtung (25) wirkt, um die Düse (20) nach einem vorgegebenen Programm in Drehung zu versetzen.

11. Vorrichtung nach Anspruch 10, bei welcher die Verbindungseinrichtungen (31)
- eine Verbindungsbüchse (41), die aus der Düse (20), der Stirnwand (19) oder beiden vorsteht, und durch eine Verbindungsleitung (41 c) zwischen einer Abgabeöffnung (19a), die in der Stirnwand (19) angeordnet ist, und einer Verbindungsleitung (20a) längs geführt ist, die sich längs der Düse (20) erstreckt, und
- einen Eingriffssitz (40a, 40b) aufweist, der in der Düse (20), der Stirnwand (19) oder beiden für einen Dreheingriff mit der Verbindungsbüchse (41) ausgebildet ist.

12. Vorrichtung nach Anspruch 11, bei welcher die Verbindungseinrichtungen (31) weiterhin
- wenigstens einen Spalt (42), der zwischen der Büchse (41) und dem Eingriffssitz (40a, 40b) ausgebildet ist und mit der Verbindungsleitung (41c) für die Aufnahme eines Teils des elastomeren Materials aus der Abgabeöffnung (19a) in Verbindung steht, und
- wenigstens einen kalibrierten engen Kanal für eine Stagnation und Vernetzung des elastomeren Materials, das in dem Spalt (42) gebildet wird, aufweist.

13. Vorrichtung nach Anspruch 12, bei welcher der Spalt (42) wenigstens eine Umfangsnut (43) hat, die im Wesentlichen einen Labyrinthweg bildet.

14. Vorrichtung nach Anspruch 12, bei welcher die Verbindungseinrichtungen (31) weiterhin wenigstens ein Drucklager (37), das funktionsmäßig zwischen einer Radialschulter (37a), die an der Düse (20) angeordnet ist, und einem Flansch (36) vorgesehen ist, der starr mit der Stirnwand (19) der Abgabeeinrichtung (16) verbunden ist, um axialen Drucken entgegenzuwirken, die von dem in dem Spalt (42) aufgenommenen elastomeren Material übertragen werden.

15. Vorrichtung nach Anspruch 10, bei welcher die Verbindungseinrichtungen (31) weiterhin wenigstens ein Stützlager (32, 33) aufweisen, das funktionsmäßig zwischen der Düse (20) und einem Flansch (35, 36) angeordnet ist, der starr mit der feststehenden Stirnwand (19) der Abgabeeinrichtung (16) verbunden ist, um die Düse (20) bezüglich der Abgabeeinrichtung drehbar zu lagern.

16. Vorrichtung nach Anspruch 10, bei welcher die Betätigungseinrichtung (38)
- einen an der feststehenden Stirnwand (19) der Abgabeeinrichtung (16) befestigten Motor für ein In-Drehung-Versetzen einer Schneckenschraube (38a) und
- ein von der Düse (20) in koaxialer Beziehung und funktionsmäßigem Eingriff mit der Schneckenschraube (38a) gehaltenes Schneckenzahnrad (39) aufweist.

17. Vorrichtung nach Anspruch 9, bei welcher die Düse (20) ein Mundstück (21) aufweist, das ein im Wesentlichen langgestrecktes Profil längs einer Haupterstreckungsachse (N-N) aufweist, die in einer Ebene liegt, die im Wesentlichen senkrecht zur Austrittsrichtung es elastomeren Materials ist.

18. Vorrichtung nach Anspruch 10, bei welcher die Steuereinrichtungen (30) weiterhin
- Einrichtungen (45) zum Erfassen wenigstens eines Parameters bezüglich der Ausrichtung der Düse (20) und
- Komparatoreinrichtungen (46) zum Vergleichen des erfassten Parameters mit wenigstens einem vorgegebenen Bezugsparameter aufweist,
- wobei die Erfassungseinrichtungen (45) und die Komparatoreinrichtungen (46) mit der Steuereinheit (44) so zusammenwirken, dass die Ausrichtung der Düse (30) modifiziert und in Übereinstimmung mit dem Bezugsparameter gebracht wird, wenn der erfasste Parameter sich von dem Bezugsparameter unterscheidet.

19. Vorrichtung nach Anspruch 9, bei welcher die Betätigungseinrichtungen (22)
- Drehantriebselemente, die an dem Trägerelement (15) wirken, um der Ablegefläche (15a) eine Bewegung für ein Umfangswickeln des langgestreckten Elements (17) zu geben, und
- Querantriebselemente zur Ausführung von Querbewegungen zwischen der Düse (20) und dem Trägerelement (15) aufweisen, um das fortlaufende langgestreckte Element (17) in Windungen zu verteilen, die nahe beieinander auf der Ablegefläche (15a) angeordnet sind.

20. Vorrichtung nach Anspruch 9, bei welcher die Abgabeeinrichtung (16) wenigstens einen Extruder aufweist.

## Revendications

1. Procédé de fabrication de pneus, comprenant les étapes consistant à :
- assembler des composants (5, 5a, 6, 9, 11, 12) d'un pneu non fini (2) sur une surface de pose (15a) d'un élément de support (15),
dans lequel au moins l'un desdits composants (5, 5a, 6, 9, 11, 12) est formé par les étapes consistant à :
- positionner l'élément de support (15) en face d'une buse (20) d'un dispositif distributeur (16) ;
- faire sortir un matériau élastomère par la buse (20), pour former un élément allongé continu (17) ;
- provoquer un mouvement relatif entre l'élément de support (15) et la buse (20) pour enrouler et répartir l'élément allongé continu (17) le long d'un chemin préétabli sur la surface de pose (15a) de l'élément de support lui-même, afin de former le composant de pneu (5, 5a, 6, 9, 11, 12) ;
- maîtriser, pendant la formation du composant de pneu (5, 5a, 6, 9, 11, 12), l'orientation de la buse (20) autour de la direction de sortie (Z-Z) de l'élément allongé (17) de la buse (20), afin de suivre ladite surface de pose (15a).

2. Procédé selon la revendication 1, dans lequel la maîtrise de l'orientation de la buse (20) comprend l'étape consistant à modifier l'orientation de ladite buse (20) selon un programme prédéterminé pendant la formation du composant (5, 5a, 6, 9, 11, 12) du pneu (2).

3. Procédé selon la revendication 1, dans lequel, pendant la commande de l'orientation de la buse (20), la suite d'étapes suivante est répétée de façon cyclique :
- détection d'au moins un paramètre se rapportant à l'orientation de la buse (20) ;
- comparaison du paramètre détecté avec au moins un paramètre de référence prédéterminé ; et
- modification de l'orientation de la buse (20) pour la conformer au paramètre de référence, lorsque le paramètre détecté diffère du paramètre de référence.

4. Procédé selon la revendication 1, dans lequel la buse (20) est pourvue d'une filière (21) ayant un profil substantiellement allongé le long d'un axe principal de celle-ci (N-N), ledit profil se trouvant dans un plan substantiellement perpendiculaire à la direction de sortie (Z-Z) du matériau élastomère.

5. Procédé selon la revendication 4, dans lequel ladite étape de commande consiste à moduler l'orientation de la buse (20) entre un état de repos à plat dans lequel ledit axe principal (N-N) de la filière (21) est substantiellement parallèle à la surface de pose (15a) en un point d'application de l'élément allongé (17), et un état de pose dans le sens du bord dans lequel ledit axe principal (N-N) de la filière (21) est substantiellement perpendiculaire à la surface de pose (15a) en un point d'application de l'élément allongé (17).

6. Procédé selon la revendication 4, dans lequel ladite étape de commande consiste à moduler l'orientation de la buse (20) de manière à maintenir ledit axe principal (N-N) de la filière (21) substantiellement parallèle à la surface de pose (15a) en un point d'application de l'élément allongé (17).

7. Procédé selon la revendication 4, dans lequel ladite étape de commande consiste à moduler l'orientation de la buse (20) de manière à maintenir ledit axe principal (N-N) de la filière (21) substantiellement perpendiculaire à la surface de pose (15a) en un point d'application de l'élément allongé (17).

8. Procédé selon la revendication 1, dans lequel le mouvement relatif entre l'élément de support (15) et la buse (20) comprend les étapes consistant à :
- entraîner l'élément de support (15) en rotation pour donner à la surface de pose (15a) un mouvement pour l'enroulement circonférentiel de l'élément allongé (17) ;
- effectuer des déplacements relatifs de répartition transversale entre la buse (20) et l'élément de support (15) pour répartir l'élément allongé continu (17) en spires rapprochées sur la surface de pose (15a), afin de former le composant (5, 5a, 6, 9, 11, 12) du pneu (2).

9. Dispositif de fabrication de pneus comprenant :
- au moins un élément de support (15) ;
- des dispositifs (14) pour assembler des composants (5, 5a, 6, 9, 11, 12) d'un pneu non fini (2) sur une surface de pose (15a) portée par l'élément de support (15) ;
dans lequel lesdits dispositifs d'assemblage (14) comprennent :
- au moins un dispositif distributeur (16) réglé pour distribuer un élément allongé continu (17) en matériau élastomère par une buse (20) ;
- des dispositifs d'actionnement (22) conçus pour provoquer un mouvement relatif entre ledit élément de support (15) et ladite buse (20), afin de former le composant de pneu (5, 5a, 6, 9, 11, 12) sur ladite surface de pose (15a) ;
- des dispositifs (30) pour la maîtrise de l'orientation de la buse (20) autour de la direction de sortie (Z-Z) de l'élément allongé (17) de la buse (20).

10. Dispositif selon la revendication 9, dans lequel lesdits dispositifs de commande (30) comprennent :
- des dispositifs de connexion (31) pour supporter à rotation ladite buse (20) par rapport à une paroi avant fixe (19) du dispositif distributeur (16) ;
- un actionneur (38) pour entraîner la buse (20) en rotation ;
- une unité de commande (44) agissant sur l'actionneur (28) pour entraîner la buse (20) en rotation suite à un programme prédéterminé.

11. Dispositif selon la revendication 10, dans lequel lesdits dispositifs de connexion (31) comprennent :
- une douille de raccord (41) faisant saillie depuis au moins un élément parmi ladite buse (20) et ladite paroi avant (19), et dans laquelle passe longitudinalement une conduite de raccord (41 c) entre une ouverture de distribution (19a) placée dans ladite paroi avant (19) et une conduite de connexion (20a) passant le long de la buse (20) ;
- un siège de mise en prise (40a, 40b) formé dans au moins un élément parmi ladite buse (20) et ladite paroi avant (19) pour se mettre en prise à rotation avec la douille de raccord (41).

12. Dispositif selon la revendication 11, dans lequel lesdits dispositifs de connexion (31) comprennent en outre :
- au moins un espace (42) formé entre la douille (41) et le siège de mise en prise (40a, 40b) et communiquant avec la conduite de raccord (41c) pour recevoir une partie du matériau élastomère provenant de l'ouverture de distribution (19a) ;
- au moins un passage étroit calibré (42a) pour la stagnation et la réticulation du matériau élastomère, formé dans ledit espace (42).

13. Dispositif selon la revendication 12, dans lequel ledit espace (42) comporte au moins une rainure circonférentielle (43) définissant substantiellement un chemin de labyrinthe.

14. Dispositif selon la revendication 12, dans lequel lesdits dispositifs de connexion (31) comprennent en outre au moins un palier de butée (37) intercalé de manière fonctionnelle entre un épaulement radial (37a) formé sur la buse (20) et une bride (36) connectée de manière rigide à la paroi avant (19) du dispositif distributeur (16), pour compenser les efforts axiaux transmis par le matériau élastomère reçu dans ledit espace (42).

15. Dispositif selon la revendication 10, dans lequel lesdits dispositifs de connexion (31) comprennent en outre au moins un palier de support (32, 33) intercalé de manière fonctionnelle entre la buse (20) et une bride (35, 36) connectée de manière rigide à la paroi avant fixe (19) du dispositif distributeur (16), pour supporter à rotation la buse (20) par rapport au dispositif distributeur lui-même.

16. Dispositif selon la revendication 10, dans lequel ledit actionneur (38) comprend :
- un moteur fixé sur la paroi avant fixe (19) du dispositif distributeur (16) pour entraîner en rotation une vis sans fin (38a) ;
- une roue dentée (39) portée par la buse (20) en relation coaxiale et fonctionnellement en prise avec la vis sans fin (38a).

17. Dispositif selon la revendication 9, dans lequel ladite buse (20) comprend une filière (21) ayant un profil substantiellement allongé le long d'un axe principal de celle-ci (N-N) se trouvant dans un plan substantiellement perpendiculaire à la direction de sortie (Z-Z) du matériau élastomère.

18. Dispositif selon la revendication 10, dans lequel lesdits dispositifs de commande (30) comprennent en outre :
- des dispositifs (45) pour détecter au moins un paramètre se rapportant à l'orientation de la buse (20) ;
- des dispositifs comparateurs (46) pour comparer le paramètre détecté avec au moins un paramètre de référence prédéterminé ;
- lesdits dispositifs de détection (45) et lesdits dispositifs comparateurs (46) interagissant avec l'unité de commande (44) pour modifier l'orientation de la buse (20) et la conformer au paramètre de référence, lorsque le paramètre détecté diffère du paramètre de référence.

19. Dispositif selon la revendication 9, dans lequel lesdits dispositifs d'actionnement (22) comprennent :
- des éléments d'entraînement en rotation agissant sur l'élément de support (15) pour donner à la surface de pose (15a) un mouvement pour l'enroulement circonférentiel de l'élément allongé (17) ;
- des éléments d'entraînement en translation pour effectuer des déplacements relatifs entre la buse (20) et l'élément de support (15) afin de répartir l'élément allongé continu (17) en spires rapprochées sur la surface de pose (15a).

20. Dispositif selon la revendication 9, dans lequel ledit dispositif distributeur (16) comprend au moins une extrudeuse.
